(19) Europäisches Patentamt
European Patent Office
Office européen des brevets

(11) EP 0 786 653 A1

## (12) EUROPÄISCHE PATENTANMELDUNG

(43) Veröffentlichungstag:
30.07.1997 Patentblatt 1997/31

(51) Int. Cl.$^6$: **G01M 3/18**, G01M 3/40

(21) Anmeldenummer: 96100949.5

(22) Anmeldetag: 24.01.1996

(84) Benannte Vertragsstaaten:
AT BE CH DE FR GB LI NL

(71) Anmelder: Seba-Dynatronic
Mess- und Ortungstechnik GmbH
D-96148 Baunach (DE)

(72) Erfinder: Kreutzer, Martin, Dr.-Ing.
D-96199 Zapfendorf (DE)

(74) Vertreter: Riebling, Peter, Dr.-Ing.,
Patentanwalt
Postfach 31 60
88113 Lindau (DE)

(54) **Verfahren und Vorrichtung zur Bestimmung von Ort und Ausmass von Leckagen in Abwasserkanälen und dgl.**

(57)     Verfahren zur Bestimmung von Ort und Ausmaß von Leckagen in Abwasserkanälen und ähnlichen Leitungssystemen, wobei die Rohrleitungen elektrisch nicht zu hoch leitend und das darin strömende Medium elektrisch leitend sind,
wobei eine elektrische Meßsonde im Rohr bewegt wird, an die Meßsonde eine Spannung angelegt wird und ein Differenzstrom zwischen dem von einem Stromsensor gemessenen
Strom und einem Referenzstrom gebildet wird.

FIG 1

## Beschreibung

Gegenstand der Erfindung ist ein Verfahren und eine Vorrichtung zur Bestimmung von Ort und Ausmaß von Leckagen in Abwasserkanälen und ähnlichen Leitungssystemen, wobei ein elektrisch nicht zu hoch leitendes Rohr vorhanden ist, welches in einen elektrisch leitenden Untergrund verlegt ist. Ein eingangs genanntes Verfahren und eine dazugehörige Vorrichtung beschreibt beispielsweise die DE 40 10 622 Al. Bei dieser bekannten Vorrichtung wird in den Abwasserleiter eine Sonde verlegt und eingeführt, welche in Längsrichtung des Rohres bewegbar ausgebildet ist. Von der Elektrode gehen Strompfade nach allen Richtungen aus, die sich im wesentlichen in Längsrichtung des Abwasserstromes erstrecken. Sobald die Elektrode an einem Leck der Rohrleitung vorbeibewegt wird, wird die Stromemission in der Nähe dieses Lecks zunehmen, was von außerhalb des Rohres durch eine entsprechende Meßanordnung meßbar ist, wobei diese Meßanordnung im wesentlichen besteht aus einer Spannungsquelle und einem Strommeßgerät, wobei die Spannungsquelle mittels einer Fernerde im Erdboden geerdet ist.

Ein Leck zeichnet sich dadurch aus, daß Abwasser in das umgebende Bodenreich exfiltriert und hierdurch der Stromfluß an der Elektrode verändert wird, sobald diese Elektrode in die Nähe des Lecks gebracht wird.

Nachteilig bei dem bekannten Verfahren ist jedoch, daß es wenig selektiv auf ein derartiges Leck anspricht. Es ist nämlich nachteilig, daß ein relativ hoher Strom in Längsrichtung des Abwasserleiters über das Abwasser selbst fließt, so daß diese Methode nicht sehr selektiv ist.

Der Erfindung liegt deshalb die Aufgabe zugrunde, ein Verfahren und eine Vorrichtung der eingangs genannten Art so weiterzubilden, daß mit wesentlich größerer Empfindlichkeit gemessen werden kann, so daß auch kleinere Lecks in Abwasserleitungen und dgl. festgestellt werden können.

Zur Lösung der gestellten Aufgabe ist die Erfindung durch die technische Lehre des Anspruches 1 oder des Anspruches 11 gekennzeichnet.

Wesentliches Merkmal der Erfindung ist, daß nun nicht mehr einfach eine stromemittierende Elektrode in einem Abwasserleiter bewegt wird, sondern daß eine Meßsonde in dem Abwasserleiter bewegt wird, welche Meßsonde im wesentlichen aus mindestens einem elektrisch leitfähigem Träger besteht, an dem mindestens ein Stromflußsensor angeordnet ist.

Der Träger kann hierbei starr als Stab ausgebildet sein. Es ist aber auch möglich, eine Drahtspirale oder einen im Rohr gespannten Draht zu verwenden. Bei der Verwendung eines Stabes kann der Stab ein- oder mehrteilig ausgebildet sein.

Zum Schutzbereich der vorliegenden Erfindung wird darauf hingewiesen, daß die vorliegende Erfindung nicht nur für die Leckortung in Abwasserkanälen eingesetzt werden kann, sondern in beliebigen Rohrleitungen, bei denen vorausgesetzt wird, daß ein elektrisch leitfähiges Medium in der Rohrleitung geführt wird und die Rohrleitung selbst nicht zu hoch leitend (metallisch) ist, so daß der Stromfluß in der leckagefreien Rohrwandung in Richtung zum umgebenden Erdreich nicht zu hoch ist.

Die Erfindung ist demzufolge nicht nur auf Rohre von Abwasserkanälen beschränkt, sondern könnte auch zur Leckortung bei anderen leitfähigen Medien in Rohrleitungen entsprechender Leitfähigkeit verwendet werden.

Die Erfindung beruht auf dem Effekt, daß man einen leitfähigen Metallstab oder einen metallbeschichteten Kunststoffstab oder dgl. in Längsrichtung in einer Rohrleitung bewegt, wobei nicht zwangsläufig eine zentrische Anordnung der Sonde in der Rohrleitung vorausgesetzt wird, sondern die Sonde könnte auch exzentrisch in der Rohrleitung in Längsrichtung bewegt werden.

Auch können gleichzeitig mehrere Meßsonden radial auf der Innenseite der Rohrwandung auf einem entsprechend geeigneten Träger bewegt werden. Hierdurch wird zusätzlich zur Bestimmung der axialen Position auch die Bestimmung der radialen Position der Leckage möglich.

Die Meßsonden können dann auch aus einfachen, stromemittierenden Elektroden bestehen, deren Ableitung in Längsrichtung, verglichen mit den Verhältnissen in der DE 40 10 622 Al, jetzt um den Faktor 1/n (n = Anzahl der Meßsonden) reduziert ist. Diese Anordnung bedeutet gegenüber der DE 40 10 622 Al eine ganz erhebliche Verbesserung der Auflösung.

Die Sonde nach der vorliegenden Erfindung besteht in einer ersten Ausführungsform demzufolge aus einem leitfähigen Stab, auf dem im Abstand voneinander zwei Stromsensoren angeordnet sind, und der Stab ist an der einen Seite an eine Spannungsquelle angeschlossen. Die Spannungsquelle ihrerseits ist zwischen dem Stab und einer Fernerde angeschlossen.

Der Stromfluß durch die beiden Stromsensoren wird erfaßt und über ein Kabel an die Außenseite des Rohres weitergeleitet, wo eine entsprechende Meßanordnung an der Erdoberfläche angeordnet ist.

Man geht hierbei von folgendem Prinzip aus:

Wenn man einen leitfähigen Metallstab, der mit einem Strom versorgt wird, axial in ein mit einer leitfähigen Flüssigkeit gefülltes Rohr einbringt, dann erstrecken sich von der Oberfläche des Metallstabs Stromlinien durch diese Flüssigkeit hindurch in Richtung zur Rohrwandung.

Bereits aufgrund des Standes der Technik (DE 40 10 622) wurde erläutert, daß es zu unerwünschten Längsströmen kommt, wenn man keine Maßnahmen trifft, um eine Bündelung der Stromlinien zu erreichen.

Hier setzt die Erfindung ein, die mit verschiedenen Vorrichtungen erreicht, daß man eine Bündelung von Stromlinien an der Sonde dadurch erreicht, daß die interessierenden Stromlinien sich im wesentlichen normal zur Wandung des Rohres erstrecken. Diese Stromlinien sind von besonderem Interesse, weil diese Stromlinien hoch empfindlich sind gegenüber einer Veränderung der Leitfähigkeit in der Rohrwandung, dort nämlich wo ein Leck sich befindet.

Es wird also mit der vorliegenden Erfindung ein Verfahren und eine Vorrichtung vorgeschlagen, mit der selektiv die Stromlinien ausgewertet werden, die sich im wesentlichen normal zur Rohrwandung befinden, während die anderen Stromlinien, die sich schräg davon erstrecken oder die gar in Längsrichtung des Mediums sich erstrecken, ausgeblendet werden.

Hierzu ist in einer ersten Ausgestaltung vorgesehen, daß auf einem leitfähigen Metallstab zwei im Abstand zueinander angeordnete Stromsensoren angeordnet sind und diese Stromsensoren aus jeweils einem Ringkern bestehen, welcher ringsum mit einer Wicklung bewickelt ist, wobei die Anschlüsse der jeweiligen Wicklung nach außen geführt sind. Es handelt sich um eine Rogowski-Spule. Die Erfindung ist jedoch nicht auf die Verwendung jeweils einer RogowskiSpule als Stromsensor beschränkt, es können beliebige bekannte Stromsensoren verwendet werden, die geeignet sind, relativ kleine Ströme im Bereich von wenigen mA zu messen.

Wichtig ist, daß man, wenn man die Differenz zwischen dem Stromfluß durch den einen Stromsensor und dem Stromfluß durch den anderen Stromsensor nimmt, einen Meßstrom bzw. einen Ableitstrom erhält, welcher die Information über den Ort der Leckage enthält. Die Größe des Meßstroms durch die Leckage gibt dabei Auskunft über das Ausmaß der Leckage.

Die Sonde ist nämlich dreigeteilt und besteht aus einem hinteren Sondenteil, einem mittleren Sondenteil und einem vorderen Sondenteil. Die Dreiteilung ist in der ersten Ausführung dadurch bewirkt, daß die Sonde als durchgehender Metallstab ausgebildet ist, daß aber der mittlere Sondenteil definiert wird durch den Zwischenraum, der sich zwischen den beiden im Abstand zueinander angeordneten Stromsensoren ergibt. Der mittlere Teil ist dann der Sensorteil. Der Strom, der hier in Richtung zur Rohrwandung emittiert wird, wird gemessen. Die beiden äußeren Teile der Sonde haben nur die Aufgabe, den Stromfluß des mittleren Sondenteils in Richtung zur Rohrwandung sicherzustellen. Dies geschieht dadurch, daß sich alle drei Teile der Sonde auf derselben Potentialebene befinden, wobei im ersten Ausführungsbeispiel alle drei Teile aus einem durchgehenden Metallstab oder einem entsprechenden Kunststoffteil, welches metallisiert ist, bestehen.

Voraussetzung für die Messung ist, daß die beiden Stromsensoren genau identisch ausgebildet sind, um so eine Aussage über den Differenzstrom treffen zu können.

In einer Weiterbildung der vorliegenden Erfindung kann es vorgesehen sein, nur einen einzigen Stromsensor zu verwenden, durch den aber zwei Ströme geführt werden, um so wieder eine Differenzbildung zwischen zwei Strömen zu erreichen. Die Messung des zweiten Stroms wird allerdings nicht durch einen zweiten, entfernt vom ersten Stromsensor angeordneten Sensor erreicht, sondern sie wird dadurch erreicht, daß eine mechanische Trennung der durchgehenden Metallsonde durchgeführt und im Unterbrechungsbereich eine Leitung sowohl an die eine Stirnseite als auch an die andere Stirnseite der daran anschließenden Sondenteile angeschlossen wird, wobei diese Leitung durch den ersten Stromsensor hindurchgeführt ist und so im ersten Stromsensor sofort ein Meßsignal erzeugt, welches dem zu messenden Differenzstrom entspricht.

Auf diese Weise muß nicht mehr sichergestellt werden, daß zwei identische Stromsensoren verwendet werden, da nur ein einziger Stromsensor nötig ist.

In einer dritten Ausgestaltung der Erfindung ist es vorgesehen, daß die Sonde nicht als Metallstab ausgebildet ist, sondern als relativ dünne metallisch leitende Spirale, die als Draht in der Leitung entlang bewegt werden kann, so daß auch sehr dünne Abwasserrohre (Hausanschlüsse u. dgl.) untersucht werden können.

Zur Verbesserung der Sondeneigenschaft kann es vorgesehen sein, daß im Abstand hintereinander auf diesem Spiraldraht zwei Kugelelektroden oder andere leitfähige Körper befestigt sind, die leitfähig mit dem Draht verbunden sind. Im Zwischenraum zwischen den beiden Elektroden sind dann wieder die vorher beschriebenen zwei Stromsensoren angeordnet, die nach dem vorher beschriebenen Prinzip arbeiten.

Es bedarf also nicht eines metallischen Stabes von einer Länge von z. B. einem Meter, sondern es kann auch eine durchgehende Spirale verwendet werden, auf deren Bereich die Sonde definiert wird.

In einer vierten Ausgestaltung kann es vorgesehen sein, daß stationär in dem zu untersuchenden Rohr ein Draht gespannt wird, der nicht bewegt wird, wobei auf diesem Draht eine Sonde bewegbar ist. An den Draht wird dann eine Spannung angelegt, und auf dem Draht ist dann die Sonde bewegbar, die aus den beiden vorher genannten Stromsensoren besteht, die im gegenseitigen Abstand voneinander angeordnet sind und die auf Abstand durch entsprechende Stäbe gehalten sind; diese Stäbe sind isolierend ausgebildet.

Durch die Anordnung der beiden Stromsensoren in gegenseitigem Abstand voneinander wird somit sichergestellt, daß die beiden Stromsensoren nur den zwischen den Stromsensoren befindlichen Abschnitt des Drahtes als Meßstrecke erfassen.

In einer weiteren Ausgestaltung kann die, beim Metallstab zwangsläufige Potentialgleichheit der drei Sondenteile bei mechanischer und elektrische Trennung durch eine aktive Regelschaltung erzeugt werden. In diesem Falle wäre dann einfach der durch das mittlere Sondenteil emittierte Strom direkt zu messen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen - einschließlich der Zusammenfassung - offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:

Figur l: Schematisiert ein erstes Ausführungsbeispiel der Erfindung;

Figur 2: Ein Meßdiagramm des Meßstromes längs der Leitung;

Figur 3: Schnitt durch eine Leitung nach Figur 1 mit verschiedener Anordnung der Sonde;

Figur 4: Ein Halbschnitt durch ein Rohr mit schematisierter Darstellung der Stromverteilung an einer Sonde;

Figur 5: Schematisiert die Darstellung einer Rogowski-Spule;

Figur 6: Eine zweite Ausgestaltung der Meßvorrichtung;

Figur 7: Eine dritte Ausgestaltung der Meßvorrichtung;

Figur 8: Eine vierte Ausgestaltung der Meßvorrichtung;

Figur 9: Eine fünfte Ausgestaltung der Meßvorrichtung;

Figur 10: Mehrere Sonden radial verteilt.

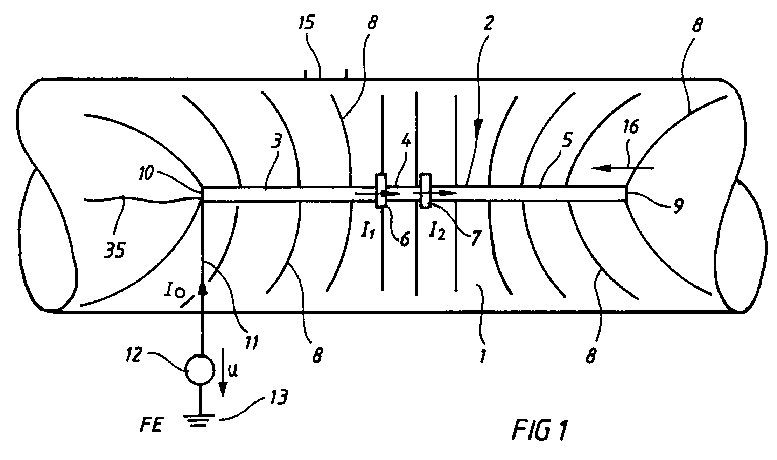

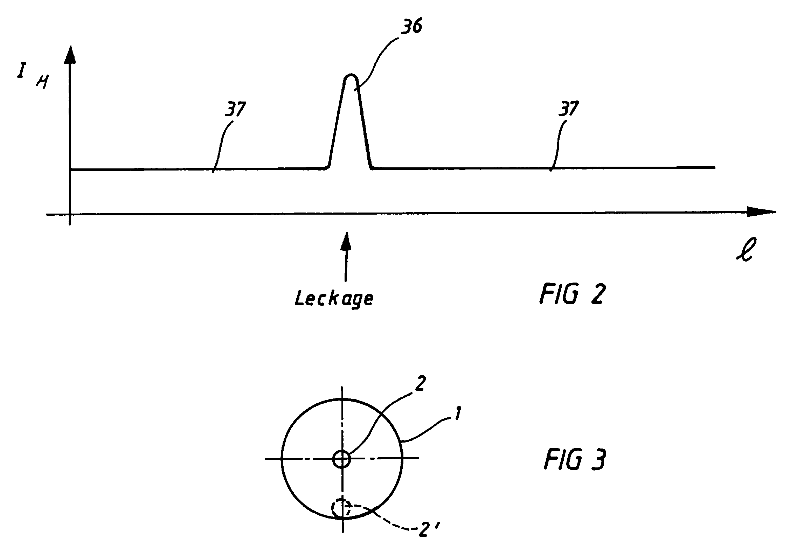

In den Figuren 1 und 3 ist ein zu untersuchendes Rohr 1 dargestellt, welches eine nicht zu hohe Leitfähigkeit der Rohrwandung aufweist. Die Meßanordnung besteht nach dem ersten Auführungsbeispiel aus einer Sonde 2, die im gezeigten Ausführungsbeispiel aus einem Vollrohr oder Hohlrohr besteht, welches im wesentlichen aus drei verschiedenen Sondenteilen besteht, nämlich aus einem vorderen Sondenteil 3, einem mittleren Sondenteil 4 und einem hinteren Sondenteil 5.

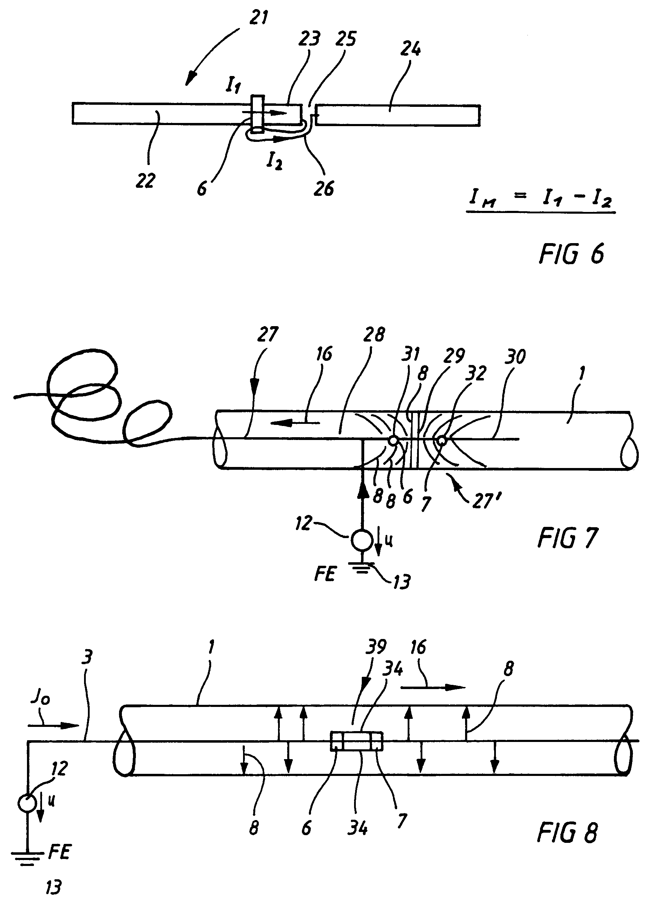

Das mittlere Sondenteil 4 ist von besonderem Interesse und wird im gezeigten Ausführungsbeispiel nur dadurch gebildet, daß auf dem metallischen Stab (Sonde 2) zwei Stromsensoren 6,7 im gegenseitigen Abstand voneinander auf diesem Stab angeordnet oder in den Stab integriert , wobei der Stab also durch diese Stromsensoren 6,7 hindurchtritt. Die Stromsensoren 6,7 sind möglichst zentrisch auf diesem Stab angeordnet. Sie bestehen im wesentlichen aus einer Rogowski-Spule, wie sie anhand der Figur 5 näher beschrieben ist. Die Rogowski-Spule besteht aus einem Ringkern 18, der aus einem ferromagnetischen Material besteht, welcher Ringkern mit einer Wicklung 19 umwickelt ist, die Anschlüsse 20 nach außen führt. An diesen Anschlüssen 20 wird eine Spannung als Meßwert entstehen, wenn durch die Rogowski-Spule ein Strom längs eines Leiters 17 fließt. Nach diesem Prinzip arbeitet die Sonde nach Figur l.

Der Meßstrom, welcher im mittleren Sondenteil 4 gemessen wird, ergibt sich aus der Differenz des Stromes ll in dem Stromsensor 6 zu dem Strom l2 in dem Stromsensor 7.

Die Stromlinienverteilung ist in Figur 1 dargestellt und man erkennt, daß im Bereich des mittleren Sondenteils 4 die Stromlinien 8 im wesentlichen senkrecht zur Rohrwandung sich radial von der Sonde 2 weg erstrecken, während in den übrigen Sondenteilen 3,5 die Stromlinien e sich schräg von der Sonde 2 in das Rohr hinein erstrecken. Diese letzteren Stromlinien werden erfindungsgemäß ausgeblendet.

Die Sonde 2 ist spiegelsymmetrisch bezüglich des Längsmittenteiles ausgebildet.

An der Spitze 10 der Sonde 2 können hierbei Kabel 35 angeschlossen werden, über welche die Ströme ll und l2 nach außen abgeleitet werden.

Ebenso kann es vorgesehen sein, daß die Ströme ll und l2 bereits schon in der Sonde selbst aufbereitet werden.

Die gesamte Sonde wird also mit ihrem Ende 9 und der Spitze 10 in Pfeilrichtung 16 durch das Rohr 1 bewegt.

Zur Einspeisung eines Anregungsstromes l0 ist hierbei eine Spannungsquelle 12 vorgesehen, die über eine Leitung 11 mit der Spitze 10 der Sonde 2 verbunden ist. Das andere Ende der Spannungsquelle 12 ist mit einer Fernerde 13 verbunden, die in das Erdreich eingelassen ist.

Gemäß Figur 2 erkennt man nun, daß wenn die Sonde 2 in Pfeilrichtung 16 entlang des Rohres 1 bewegt wird, am Ort der Leckage 15 ein Leckstrom im Maximum 36 meßbar ist, während in den übrigen Bereichen lediglich ein geringerer Ableitstrom meßbar ist. Dies ist bei Position 37 erkennbar. Die Höhe des Maximums definiert dabei das Ausmaß der Leckage.

Die Figur 3 zeigt, daß die Sonde 2 nicht notwendigerweise zentrisch im Rohr 1 geführt werden muß, sondern es ist möglich, eine Sonde 2' auch an dem Boden des Rohres l zu bewegen, wobei dann die gleichen Verhältnisse gelten.

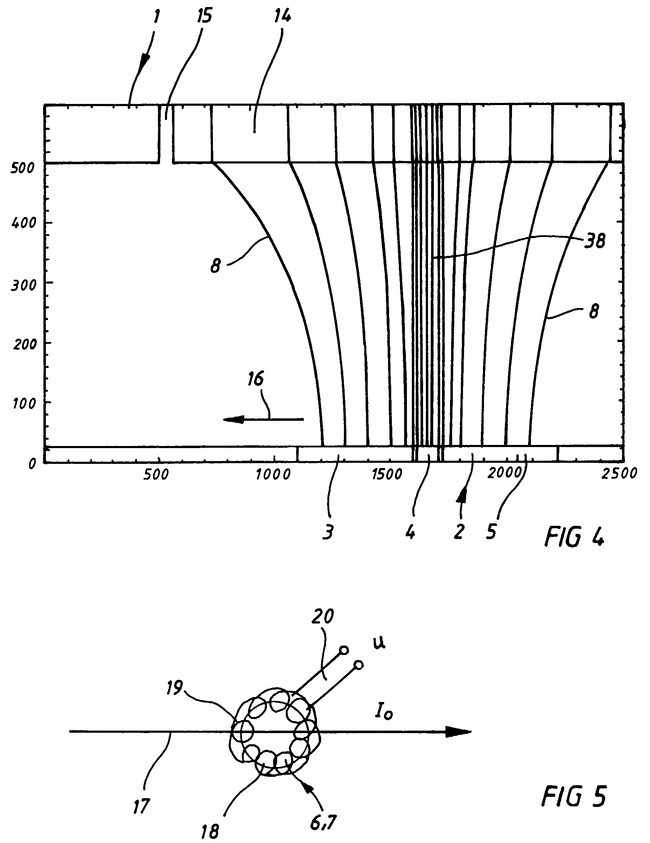

In Figur 4 ist ein Halbschnitt durch ein Rohr dargestellt, wobei die Stromlinienverteilung der Stromlinien 8 noch besser dargestellt ist.

Es ist hierbei erkennbar, daß sich ein Bereich 38 von Stromlinien 8 ergibt, welcher Bereich durch den mittleren Sondenteil 4 definiert ist, wobei man ferner erkennen kann, daß bei den äußeren Sondenteilen 3,5 sich schräge Stromlinien 8 ergeben. Kommt nun der mittlere Bereich 38 mit den normal zur Rohrwandung 14 gebündelten Stromlinien 8 in den Bereich der Leckage 15, dann kommt es zu dem vorher erwähnten Maximum 36 des Meßstromes.

An der Ausführung der Figur 4 sieht man die erfindungsgemäße Bündelung des Meßstromes aufgrund der Unterteilung der Sonde in drei Bereiche.

Die Figur 6 zeigt eine weitere Ausgestaltung der Erfindung, wo erkennbar ist, daß eine Sonde 21 wiederum aus drei Sondenteilen 22,23,24 besteht, wobei der mittlere Sondenteil 23 nicht durch zwei im Abstand voneinander angeordnete Stromsensoren 6,7 definiert wird, sondern lediglich durch einen einzigen Stromsensor 6 und eine mechanische Unterbrechung 25 im Bereich der metallischen Sonde 21. Elektrisch bleiben die beiden Sondenteile 23,24 über eine Leitung 26 verbunden.

Jeweils an den einander zugekehrten Stirnseiten der Unterbrechung 25 ist eine Leitung 26 angeschlossen, durch welche der Strom I2 fließt, welcher ebenso wie der Strom I1 durch den Stromsensor 6 geleitet wird. Der Strom I1 ist also der Stromfluß zwischen den Sondenteilen 22 und 23, während der Strom I2 der Stromfluß durch die Leitung 26, also der Stromfluß zwischen den Sondenteilen 23 und 24, ist. Beide Ströme durchgreifen den Stromsensor 6, der somit sofort den Differenzstrom Im=I1-I2 erfaßt und dieser Meßstrom kann dann sofort über ein entsprechendes Kabel 35 der Auswertung zugeführt werden, oder noch innerhalb der Sonde verarbeitet werden.

Vorteil dieser Maßnahme ist, daß nicht identische Stromsensoren 6,7 erforderlich sind, sondern daß die Messung mit einem einzigen Stromsensor erfolgen kann.

In Figur 7 ist ein weiteres Ausführungsbeispiel gezeigt, welches darstellt, daß auf einen leitfähigen metallischen Stab verzichtet werden kann und die hier gezeigte Sonde 27 aus einer metallisch leitenden Spirale besteht, in deren vorderem Bereich die Sensorik 27' ausgebildet ist.

Die Ausbildung der Sensorik 27' erfolgt dadurch, daß wiederum zwei im Abstand zueinander angeordnete Stromsensoren 6,7 auf den Draht aufgeschoben sind, so daß sich wiederum zwei äußere Sondenteile 28,30 ergeben und hierdurch ein mittlerer Sondenteil 29 als Zwischenraum zwischen den beiden Stromsensoren 6,7 definiert wird.

In der vorher beschriebenen Weise wird die Spirale wieder an eine Spannungsquelle 12 angeschlossen und das andere Ende der Spannungsquelle ist über eine Fernerde 13 mit dem Erdreich verbunden.

Es ist wiederum erkennbar, daß die Stromlinien 8 sich in der in Figur 4 dargestellten Art ausbilden.

Zur Verbesserung der Abgrenzung der Sondenteile 28,30 von dem mittleren Sondenteil 29 kann es zusätzlich noch vorgesehen sein, entsprechende Elektroden 31,32 vorzusehen, die im gezeigten Ausführungsbeispiel bevorzugt als Kugelelektroden ausgebildet sind und die elektrisch leitfähig mit dem Draht verbunden sind.

Es werden hierbei wegen der Feldkonzentration Kugelelektroden 31,32 bevorzugt.

Während in Figur 7 die Spirale in Pfeilrichtung 16 oder in Gegenrichtung hierzu durch das Rohr 1 gezogen wird, zeigt die Figur 8 ein anderes Ausführungsbeispiel, bei welchem ein stationärer Draht 33 verwendet wird, der in dem Rohr I gespannt ist. Dieser Draht ist wiederum mit einer Spannungsquelle 12 und einer Fernerde 13 mit Strom versorgt. Auf dem Draht ist nun eine Sonde 39 bewegbar angeordnet, wobei diese Sonde 39 in Pfeilrichtung 16 und in Gegenrichtung hierzu über eine nicht näher dargestellte Anordnung auf dem Draht hin- und hergezogen werden kann. Die Sonde 39 besteht wiederum aus zwei im Abstand voneinander angeordneten Stromsensoren 6,7, die elektrisch isolierend von Stäben 34 auf Abstand gehalten werden und wobei der Draht 33 die beiden Stromsensoren 6,7 möglichst zentrisch durchgreift. Es wird wiederum der Strom I0 in den Draht eingespeist und an den Stromsensoren 6,7 werden die Ströme I1 und I2 erfaßt und mittels eines nicht näher dargestellten Kabels als Meßströme nach außen geleitet und dort ausgewertet.

Der Vorteil eines gespannten Drahtes in einem Rohr liegt darin, daß eine absolut symmetrische Anordnung des Drahtes im Rohr gewährleistet ist, so daß auch kleinste Leckagen, die im Randbereich des Rohres entstehen, mit Sicherheit erfaßt werden können.

Der durchgehende Draht gewährleistet eine im gesamten Rohr vorhandene normale Stromverteilung der Stromlinien 8 in Bezug zur Rohrwandung des Rohres I.

Diese Verteilung braucht dann nur noch durch Bewegung der Sonde 39 auf dem Draht 33 ausgemessen zu werden.

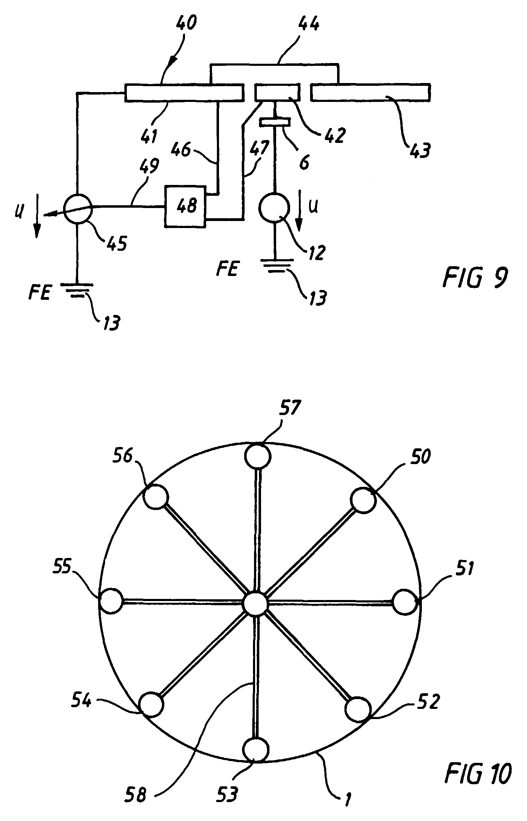

Eine weitere Ausgestaltung der Meßvorrichtung zeigt Figur 9. Die mechanisch in drei Teile 41,42,43 aufgeteilte Sonde 40 wird in ihrem Mittelteil 42 gegen die Betriebserde 13 an eine Spannungsquelle 12 angeschlossen. Der durch die Spannungsquelle 12 hier eingespeiste Strom wird mittels des Stromsensors 6 gemessen und anschließend ausgewertet. Der Sensor 6 ist in die Sonde 40 integriert.

Die beiden über die Leitung 44 miteinander verbundenen äußeren Teile 41,43 43 der Meßsonde 40 werden an eine regelbare Spannungsquelle 45 gegen die Fernerde 13 angeschlossen. Die Spannungen der einzelnen Sondenteile 41,42,43 werden über die Leitungen 46,47 erfaßt, in der Regelschaltung 48 verglichen und zur Steuerung der Spannungsquelle 45 über die Leitung 49 derart verwendet, daß die Potentialgleichheit der Sondenteile 41,42,43 hergestellt wird.

Mit Hilfe einer einzelnen Meßsonde kann nur die axiale Position der Leckage festgestellt werden. Fig 10 zeigt ein Multi-Sondensystem, welches neben der axialen Position auch die Bestimmung der radialen Position der Leckage ermöglicht. Hierbei wird je nach der gewünschten radialen Auflösung eine beliebige Anzahl Meßsonden (50-57), also z. B. acht Sonden, in der gezeigten Weise auf einen geeigneten, hier nicht näher beschriebenen Träger 58 aufgebracht, und durch das Rohr bewegt.

Die Meßsonden können hierbei auch einfache stromemittierende Elektroden sein, deren emittierter Strom gemessen wird und als Maß für Ort und Ausmaß der Leckage gilt.

Mit dem Erfindungsgemäßen Verfahren und der zugehörigen Vorrichtung läßt sich eine wesentlich größere Empfindlichkeit erreichen. Damit können auch kleinere Lecks in Abwasserleitungen zuverlässig festgestellt, und hinsichtlich ihres Ausmaßes beurteilt werden.

**Patentansprüche**

1. Verfahren zur Bestimmung von Ort und Ausmaß von Leckagen in Abwasserkanälen und ähnlichen Leitungssystemen, wobei die Rohrleitungen elektrisch nicht zu hoch leitend und das darin strömende Medium elektrisch leitend sind, **dadurch gekennzeichnet**, daß eine elektrische Meßsonde (2,21,27,39,40) im Rohr 1 bewegt wird, an der Meßsonde (2,21,27,39,40) eine Spannung angelegt wird, und der von einem mittleren, von mehreren sich auf gleichem Potential befindlichen Sondenteilen emittierte Strom gemessen wird.

2. Verfahren nach Anspruch I, **dadurch gekennzeichnet**, daß die Potentialgleichheit zwischen den Sondenteilen (3-5, 22-24, 28-30) durch die konstruktive Ausführung der Sonde (2,21,27,39) als durchgehend leitfähiger Körper gewährleistet ist.

3. Verfahren nach Anspruch I, **dadurch gekennzeichnet**, daß die Potentialgleichheit zwischen den Sondenteilen (3-5, 22-24, 28-30), bei mindestens teilweiser mechanischer Trennung, durch die Verbindung mit einem Kabel (26) gewährleistet ist.

4. Verfahren nach Anspruch I, **dadurch gekennzeichnet**, da die Potentialgleichheit der drei Sondenteile (41-43) bei mechanischer Trennung durch eine aktive elektrische Regelung gewährleistet wird.

5. Verfahren nach einem der Ansprüche 1 -3, **dadurch gekennzeichnet**, daß der vom mittleren Teil der Sonde emittierte Strom als Differenz zwischen dem von einem Stromsensor (6) gemessenen Strom und einem Referenzstrom gebildet wird.

6. Verfahren nach einem der Ansprüche I, 2 oder 5, **dadurch gekennzeichnet**, daß der Referenzstrom über einen zweiten Stromsensor (7) gemessen wird.

7. Verfahren nach einem der Ansprüche I, 3 oder 5, **dadurch gekennzeichnet**, daß der Referenzstrom direkt von der Stromversorgung auf den ersten Stromsensor (6) aufgebracht wird.

8. Verfahren nach einem der Ansprüche I bis 7, **dadurch gekennzeichnet**, daß im wesentlichen nur der Stromfluß in Richtung normal zur Rohrwand bei der Messung berücksichtigt wird.

9. Verfahren nach einem der Ansprüche 1 - 8, **dadurch gekennzeichnet**, daß eine Anzahl von Meßsonden (50-57) neben der Bestimmung der axialen Position und des Ausmaßes der Leckage auch eine Bestimmung der radialen Position erlaubt.

10. Verfahren nach Anspruch 9, **dadurch gekennzeichnet**, daß die Meßsonden (50-57) als stromemittierende Elektroden ausgebildet sind, deren Ströme einzeln über Sensoren (6) als Meßwert erfaßt werden.

11. Vorrichtung zur Bestimmung von Ort und Ausmaß von Leckagen in Abwasserkanälen und ähnlichen Leitungssystemen, wobei die Rohrleitungen elektrisch nicht zu hoch, und das darin strömende Medium elektrisch leitend sind, **dadurch gekennzeichnet**, daß im Rohr (1) eine Meßsonde (2,21,27,39,40) bewegt wird, die aus mindestens einem elektrisch leitfähigen Träger (3-5,22-24,28-30,33,41-43) besteht, an dem mindestens ein Stromflußsensor (6) angeordnet ist.

12. Vorrichtung nach Anspruch 11, **dadurch gekennzeichnet**, daß zur Bildung des Differenzstromes entweder ein zweiter Stromsensor (7) vorgesehen ist oder der Stromfluß des Referenzstroms direkt durch den ersten Stromsensor (6) erfolgt.

13. Vorrichtung nach einem der Ansprüche 11 oder 12, **dadurch gekennzeichnet**, daß die Meßsonde (2,21,27,39,40) als Stab (3-5), als mehrteiliger Stab (22-24,41-43), als Spirale (28-30) oder als Draht ausgebildet ist.

14. Vorrichtung nach Anspruch 13, **dadurch gekennzeichnet**, daß Elektroden (31,32) zur besseren Abgrenzung der Sondenteile (28,30) vom Sondenteil (29) vorgesehen sind.

15. Vorrichtung nach einem der Ansprüche 11 - 14, **dadurch gekennzeichnet**, daß eine Anzahl von Meßsonden (50-57) zur zusätzlichen Bestimmung der radialen Leckposition auf einem entsprechend geeigneten Träger (58) fixiert sind, und daß diese Anordnung durch das Rohr in axialer Richtung bewegt werden kann.

16. Vorrichtung nach Anspruch 15, **dadurch gekennzeichnet**, daß als Meßsonden einfache stromemittierende Elektroden dienen, deren Strom über Sensoren (6) gemessen werden kann.

FIG 1

FIG 2

FIG 3

FIG 4

FIG 5

$$I_M = I_1 - I_2$$

FIG 6

FIG 7

FIG 8

FIG 9

FIG 10

| Europäisches Patentamt | EUROPÄISCHER RECHERCHENBERICHT | Nummer der Anmeldung EP 96 10 0949 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | DE-A-42 19 434 (RAMMNER BERNHARD ;RAMMNER BURKHARD (DE)) 16.Dezember 1993 <br> * Spalte 1 - Spalte 2 * <br> --- | 1,11-16 | G01M3/18 <br> G01M3/40 |
| Y,D | DE-A-40 10 622 (RAMMNER RUDOLF) 10.Oktober 1991 <br> * Ansprüche 1-11 * <br> --- | 1,11-16 | |
| A | PATENT ABSTRACTS OF JAPAN <br> vol. 004, no. 005 (E-165), 16.Januar 1980 <br> & JP-A-54 145182 (TOSHIBA CORP), <br> 13.November 1979, <br> * Zusammenfassung * <br> --- | 1 | |
| A | PATENT ABSTRACTS OF JAPAN <br> vol. 015, no. 338 (P-1243), 27.August 1991 <br> & JP-A-03 125939 (SHOWA ELECTRIC WIRE & CABLE CO LTD), 29.Mai 1991, <br> * Zusammenfassung * <br> ----- | 1 | |

| | | | RECHERCHIERTE SACHGEBIETE (Int.Cl.6) |
|---|---|---|---|
| | | | G01M |

Der vorliegende Recherchenbericht wurde für alle Patentansprüche erstellt

| Recherchenort | Abschlußdatum der Recherche | Prüfer |
|---|---|---|
| BERLIN | 31.Mai 1996 | Dietrich, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)